# EUROPÄISCHE PATENTSCHRIFT

(11) **EP 2 649 496 B1**
(45) Veröffentlichungstag und Bekanntmachung des Hinweises auf die Patenterteilung: **02.12.2015**
(21) Anmeldenummer: 11801649.2
(22) Anmeldetag: 05.12.2011
(51) Int. Cl.: G05B 9/02

(54) **SICHERHEITSSCHALTGERÄT ZUM FEHLERSICHEREN ABSCHALTEN EINES ELEKTRISCHEN VERBRAUCHERS**
SAFETY SWITCHING DEVICE FOR THE FAILSAFE SHUTDOWN OF AN ELECTRICAL CONSUMER
APPAREIL DE CONNEXION DE SÉCURITÉ POUR DÉSACTIVER SANS DÉFAUT UN RÉCEPTEUR ÉLECTRIQUE

(30) Priorität: 06.12.2010 DE 102010054386
(43) Veröffentlichungstag der Anmeldung: 16.10.2013
(73) Patentinhaber: Pilz GmbH & Co. KG, 73760 Ostfildern (DE)
(72) Erfinder: LE, Kim, 73760 Ostfildern (DE); RICHTER, Sebastian, 73760 Ostfildern (DE)
(74) Vertreter: Witte, Weller & Partner Patentanwälte mbB
(86) Internationale Anmeldenummer: PCT/EP2011/071688
(87) Internationale Veröffentlichungsnummer: WO 2012/076433

(56) Entgegenhaltungen:
- DE-A1- 10 011 211
- DE-A1- 10 211 099

## Beschreibung

Die vorliegende Erfindung betrifft ein Sicherheitsschaltgerät zum fehlersicheren Abschalten eines elektrischen Verbrauchers und insbesondere zum fehlersicheren Abschalten einer Maschine oder Maschinenanlage, von der eine Gefahr für Menschen ausgeht. Ein gattungsgemäßes Sicherheitsschaltgerät ist beispielsweise aus DE 100 11 211 A1 oder DE 199 62 497 A1 bekannt.

Solche Sicherheitsschaltgeräte besitzen üblicherweise eine Anzahl von Geräteanschlüssen, an denen einerseits sogenannte Meldegeräte und andererseits Aktoren angeschlossen werden. Typische Meldegeräte für Sicherheitsschaltgeräte sind Not-Aus-Taster, Schutztürschalter, Zwei-Hand-Schalter, aber auch Lichtschranken und verschiedene Sensoren, die sicherheitsrelevante Signale einer überwachten Maschine oder Maschinenanlage liefern. Das Sicherheitsschaltgerät überwacht die sicherheitsrelevanten Signale von den Meldegeräten, wertet diese aus und erzeugt in Abhängigkeit davon Steuersignale für Aktoren, die in der Lage sind, die gefährliche Maschine oder Maschinenanlage fehlersicher abzuschalten. Häufig erzeugt das Sicherheitsschaltgerät darüber hinaus Ausgangssignale, mit denen der Betätigungszustand eines einfachen mechanischen Meldegerätes, wie etwa eines Not-Aus-Tasters, überwacht wird. Beispielsweise wird das vom Sicherheitsschaltgerät erzeugte Ausgangssignal häufig in einer Schleife über elektrische Kontakte eines Not-Aus-Tasters zu einem Eingang des Sicherheitsschaltgerätes zurückgeführt, wobei das Sicherheitsschaltgerät die Maschine oder Maschinenanlage abschaltet, wenn das zurückgeführte Ausgangssignal nicht mehr erkannt wird. Im Gegensatz dazu liefern Lichtschranken oder intelligente Sensoren häufig eigene Ausgangssignale, die an einem Eingang des Sicherheitsschaltgerätes aufgenommen und ausgewertet werden können. In einem solchen Fall muss das Sicherheitsschaltgerät kein Ausgangssignal für die Überwachung der Lichtschranke bereitstellen, wenngleich dies abhängig von der verwendeten Lichtschranke trotzdem möglich ist, etwa zu Diagnosezwecken.

Je nach Anzahl und Art der Sicherheitsfunktionen, die an einer Maschine oder Maschinenanlage überwacht werden müssen, benötigt ein geeignetes Sicherheitsschaltgerät eine unterschiedliche Anzahl von Eingängen und Ausgängen für den Anschluss von Meldegeräten und Aktoren. Die Anzahl der benötigten Eingänge und Ausgänge erhöht sich, wenn eine hohe Sicherheitskategorie zur Absicherung einer sehr gefährlichen Maschine oder Maschinenanlage benötigt wird. Typischerweise werden das Meldegerät, das Sicherheitsschaltgerät und die Aktoren in solchen Fällen mit redundanten Leitungen verbunden, so dass sich die Anzahl der benötigten Eingänge und Ausgänge verdoppelt.

Andererseits besteht der Wunsch, ein Sicherheitsschaltgerät möglichst kompakt zu realisieren, da der Bauraum in einem Schaltschrank oder dergleichen häufig begrenzt ist. Es gibt daher Geräte, bei denen Geräteanschlüsse zum Anschließen von Meldegeräten und Aktoren konfigurierbar sind, so dass die Funktion des Geräteanschlusses je nach Anwendung unterschiedlich sein kann. Beispielsweise hat die Anmelderin unter der Bezeichnung PSS SB DI16 dezentrale E/A-Baugruppen für ein dezentrales Sicherheitssteuerungssystem vertrieben, bei denen an bestimmten Anschlussklemmen unterschiedliche Arten von Ausgangssignalen zum Überwachen von Meldegeräten bereitgestellt werden konnten. Insbesondere konnten stationäre Ausgangssignale oder getaktete Ausgangssignale mit unterschiedlichen Taktperioden an bestimmten Ausgangsklemmen wahlweise bereitgestellt werden. Auf diese Weise konnte die Anzahl der benötigten Anschlussklemmen und damit auch die Gehäusegröße der Geräte reduziert werden. Die konfigurierbaren Anschlussklemmen standen jedoch nicht für alle Sicherheitsfunktionen zur Verfügung, insbesondere nicht für einen Wechsel von einer Eingangs- zu einer Ausgangsfunktion.

EP 1 347 388 B1 offenbart eine Kopplungsvorrichtung zum Anschließen von Geräten an ein Bussystem. Die Kopplungsvorrichtung dient insbesondere zum Anschließen von Meldegeräten und Aktoren an ein dezentrales Steuerungssystem. Um eine flexible Anschaltung von Sicherheitssensoren und Standardsensoren mit standardisierten, kostengünstigen Steckverbindungen zu ermöglichen, schlägt EP 1 347 388 B1 vor, dass einzelne Anschlusspins der Stecker mit unterschiedlichen Funktionseigenschaften aus einer Menge von vordefinierten Funktionseigenschaften belegt werden können. In einem Ausführungsbeispiel soll der Stecker fünf Kontaktelemente aufweisen, von denen zumindest einige wahlweise als Eingang oder als Masseanschluss genutzt werden können. Schaltungstechnische Details, die eine solche variable Verwendung eines Kontaktelements ermöglichen, sind in dem Dokument allerdings nicht beschrieben.

Die eingangs genannte DE 199 62 497 A1 offenbart ein Sicherheitsschaltgerät mit einer Anzahl von Geräteanschlüssen, mit einem Eingangskreis zum Aufnehmen eines Eingangssignals von einem Meldegerät, das einen sicherheitsrelevanten Zustand signalisiert, mit einem Ausgangskreis zum Ausgeben eines Ausgangssignals und mit Schaltelementen, die dazu ausgebildet sind, einen Stromversorgungspfad zu einem elektrischen Verbraucher zu unterbrechen. Eine Auswerte- und Steuereinheit steuert die Schaltelemente in Abhängigkeit von dem Eingangssignal an. Der Eingangskreis beinhaltet einen Optokoppler, der ein von dem Sicherheitsschaltgerät erzeugtes Taktsignal mit dem Eingangssignal von dem Meldegerät verknüpft. Das periodische Taktsignal steuert eine Leuchtdiode des Optokopplers, während das Signal von dem Meldegerät über die Kollektor-Emitter-Strecke eines lichtempfindlichen Transistors geführt ist. Die Verknüpfung des Eingangssignals von dem Meldegerät mit dem Taktsignal von dem Sicherheitsschaltgerät hat zur Folge, dass das Signal von dem Meldegerät mit dem Taktsignal moduliert wird. Infolgedessen weist das kombinierte Signal periodische Signalwechsel auf, die dem Sicherheitsschaltgerät eine interne Funktionskontrolle seiner Signalwege ermöglichen, auch wenn das Signal vom Meldegerät über längere Zeiträume hinweg statisch in einem Signalzustand verbleibt.

Aus DE 102 11 099 A1 ist eine Vorrichtung zur Ansteuerung eines elektrischen Verbrauchers bekannt, wobei ein Steuertransistor über eine Leitung mit einem Port einer Steuer- und Auswerteeinheit verbunden ist. Ein Ausgang des Steuertransistors ist mit dem Steuereingang eines Treibertransistors verbunden. Am Ausgang des Treibertransistors ist der elektrische Verbraucher angeordnet. Außerdem ist eine Spannungsrückkopplungseinheit vorgesehen, die die elektrische Spannung am Ausgang des Treibertransistors auf die Leitung zwischen dem Port der Steuer- und Auswerteeinheit und dem Steuertransistor zurückkoppelt. Der Port der Steuer- und Auswerteeinheit kann wahlweise als Ausgang zum Ausgeben des Steuersignals oder als Eingang zum Sensieren eines auf der Leitung anstehenden Signals konfiguriert werden.

Vor diesem Hintergrund ist es eine Aufgabe der vorliegenden Erfindung, ein Sicherheitsschaltgerät mit einer Anzahl von Geräteanschlüssen anzugeben, die möglichst flexibel für unterschiedliche Funktionen einschließlich unterschiedliche Sicherheitsfunktionen verwendet werden können. Es ist insbesondere eine Aufgabe, ein Sicherheitsschaltgerät mit zumindest einem Geräteanschluss anzugeben, der wahlweise als Eingang oder als Ausgang verwendbar ist, wobei dieser Geräteanschluss auch für Anwendungen zur Verfügung steht, die eine hohe Sicherheitskategorie erfordern. Eine hohe Sicherheitskategorie in diesem Sinne ist Kategorie 3 oder höher im Sinne der europäischen Norm EN 954-1, SIL2 oder höher gemäß EC61508 oder Kategorie 3 oder höher gemäß ISO 13849-1. Hiernach darf ein Fehler in der Sicherheitskette, etwa der Ausfall eines Bauteils oder die Quetschung eines Kabels, nicht zum Verlust der Sicherheitsfunktion führen, was durch entsprechende Gestaltung der Geräte gewährleistet sein muss. Vorzugsweise soll der konfigurierbare Geräteanschluss des neuen Sicherheitsschaltgerätes für diese Sicherheitsanforderungen verwendbar sein.

Gemäß einem Aspekt der Erfindung wird diese Aufgabe durch ein Sicherheitsschaltgerät zum fehlersicheren Abschalten eines elektrischen Verbrauchers gelöst, mit einer Anzahl von Geräteanschlüssen, mit zumindest einem Eingangskreis zum Aufnehmen eines Eingangssignals von einem Meldegerät, das einen sicherheitsrelevanten Zustand signalisiert, mit zumindest einem Ausgangskreis zum Ausgeben eines Ausgangssignals, mit zumindest einem Schaltelement, das dazu ausgebildet ist, einen Stromversorgungspfad zu dem Verbraucher zu unterbrechen, und mit einer Auswerte- und Steuereinheit, die dazu ausgebildet ist, das zumindest eine Schaltelement in Abhängigkeit von dem Eingangssignal anzusteuern, wobei der zumindest eine Eingangskreis und der zumindest eine Ausgangskreis an einem Geräteanschluss zusammengeführt sind, so dass dieser Geräteanschluss wahlweise als Eingang zum Aufnehmen des Eingangssignals oder als Ausgang zum Ausgeben des Ausgangssignals verwendbar ist, wobei der Eingangskreis einen Testschalter aufweist, der mit der Auswerte- und Steuereinheit gekoppelt ist, und wobei die Auswerte- und Steuereinheit dazu ausgebildet ist, das Eingangssignal mit Hilfe des Testschalters gezielt zu unterdrücken.

In einigen bevorzugten Ausführungsbeispielen ist das neue Sicherheitsschaltgerät eine konfigurierbare Kleinsteuerung, die die Auswertung und Überwachung der angeschlossenen Meldegeräte und die Ansteuerung der Aktoren zum Abschalten einer Maschine oder Maschinenanlage als Stand-Alone-Gerät ermöglicht. In diesem Fall müssen lediglich die Meldegeräte und Aktoren an das neue Sicherheitsschaltgerät angeschlossen werden und das Sicherheitsschaltgerät muss entsprechend der gewünschten Sicherheitsfunktionen konfiguriert und/oder programmiert werden.

In anderen Ausführungsbeispielen kann das neue Sicherheitsschaltgerät Teil eines größeren dezentralen Steuerungssystems sein. Beispielsweise kann das Sicherheitsschaltgerät eine dezentrale E/A-Einheit sein, die über einen Feldbus mit einer zentralen Steuerung verbunden wird. In einem noch anderen Ausführungsbeispiel kann das Sicherheitsschaltgerät eine Modulbaugruppe für eine programmierbare Steuerung sein, etwa für eine programmierbare Steuerung, wie sie die Anmelderin der vorliegenden Erfindung unter der Marke PSS® vertreibt. In allen Fällen handelt es sich um eine Sicherheitsschaltvorrichtung, die zumindest die Kategorie 3/SIL2 im Sinne der vorgenannten Normen oder vergleichbare Sicherheitsanforderungen erfüllt.

Das Sicherheitsschaltgerät besitzt zumindest einen Geräteanschluss, der wahlweise als Eingang für eine sichere Eingangsfunktion oder als Ausgang verwendet werden kann. Der Ausgang kann - ggf. in Kombination mit einem weiteren Ausgang an einem weiteren Geräteanschluss - ebenfalls eine Sicherheitsfunktion realisieren. Mit Hilfe des Testschalters im Eingangskreis kann die Auswerte- und Steuereinheit die Plausibilität eines Eingangssignals an dem konfigurierbaren Geräteanschluss überprüfen. Insbesondere kann die Auswerte- und Steuereinheit mit Hilfe des Testschalters testen, ob ein Signalwechsel von einem statischen High-Pegel am Eingang zu einem Low-Pegel erkannt wird. Dies ist für die Realisierung einer sicheren Eingangsfunktion mit statischen Signalen von Bedeutung, da der Low-Pegel an einem sicheren Eingang typischerweise eine Sicherheitsanforderung repräsentiert (Ruhestromprinzip).

Die Auswerte- und Steuereinheit kann mit Hilfe des einen Testschalters nicht unbedingt feststellen, ob ein Fehler in der äußeren Beschaltung des Sicherheitsschaltgerätes und insbesondere in den Anschlussleitungen zu dem einen konfigurierbaren Geräteanschluss aufgetreten ist. Dies ist jedoch mit einem einkanaligen Eingang und einem stationären Eingangssignal grundsätzlich problematisch. Zur Erreichung einer höheren Sicherheitskategorie werden daher typischerweise zwei oder mehr Eingänge mit einer redundanten Beschaltung verwendet, die das neue Sicherheitsschaltgerät in den bevorzugten Ausführungsbeispielen gleichermaßen ermöglicht, indem es mehrere konfigurierbare Geräteanschlüsse bereitstellt. Mit Hilfe des Testschalters kann die Auswerte- und Steuereinheit jedoch die geräteinterne Funktion des Eingangskreises testen und somit ein potentielles Bauteilversagen, das das Erkennen eines Low-Pegels verhindern würde, geräteintem erkennen. Damit ermöglicht das neue Sicherheitsschaltgerät prinzipiell die Realisierung einer Sicherheitsfunktion an der konfigurierbaren Anschlussklemme.

Andererseits kann der Geräteanschluss alternativ als Ausgang verwendet werden. Dabei kann der Testschalter in einigen Ausführungsbeispielen dazu verwendet werden, den Eingangskreis von dem Ausgangssignal zu entkoppeln. In anderen Ausführungsbeispielen kann die Auswerte- und Steuereinheit das Ausgangssignal über den Eingangskreis am selben Geräteanschluss geräteintern zurücklesen, was die Realisierung einer sicheren Ausgangsfunktion erleichtert.

In allen Fällen ist es bevorzugt, wenn die Auswerte- und Steuereinheit den elektrischen Verbraucher mit Hilfe des zumindest einen Schaltelements abschaltet, wenn der Test des Eingangssignals ein unerwartetes Ergebnis liefert und insbesondere wenn ein mit Hilfe des Testschalters gezielt hervorgerufener Low-Pegel (Eingangssignal unterdrückt) nicht zur Auswerte- und Steuereinheit gelangt.

Die oben genannte Aufgabe ist daher vollständig gelöst.

In einer bevorzugten Ausgestaltung sind der zumindest eine Eingangskreis und der zumindest eine Ausgangskreis an einem Knoten zusammengeführt, der zwischen dem Geräteanschluss und dem Testschalter liegt.

In dieser Ausgestaltung erreicht das Ausgangssignal den konfigurierbaren Geräteanschluss, ohne dass es über den Testschalter zum Geräteanschluss geführt wird. Somit kann der Testschalter das Ausgangssignal an dem konfigurierbaren Geräteanschluss nicht verfälschen. Der Ausgang ist somit als "normaler" Ausgang realisiert, was eine einfachere Integration in bewährte Schaltungskonzepte für Sicherheitsschaltgeräte ermöglicht.

In einer weiteren Ausgestaltung besitzt das Sicherheitsschaltgerät einen Signalpfad, der mit dem Ausgangskreis verbunden ist und der den Testschalter überbrückt.

In dieser Ausgestaltung ist parallel zum Testschalter ein Signalpfad angeordnet, über den ein Ausgangssignal des Ausgangskreises unter Umgehung des Testschalters in den Eingangskreis eingekoppelt wird. Diese Ausgestaltung ermöglicht ein doppeltes Zurücklesen des Ausgangssignals zu der Auswerte- und Steuereinheit, nämlich einerseits über den Signalpfad, der wie ein Bypass zu dem Testschalter wirkt, und andererseits über den Testschalter selbst. Die Ausgestaltung besitzt den Vorteil, dass die Auswerte- und Steuereinheit eine unerwünschte Beeinflussung eines Eingangssignals an der Anschlussklemme durch den Ausgangskreis erkennen kann. Insbesondere kann die Auswerte- und Steuereinheit aufgrund des Signalpfades erkennen, ob der Ausgangskreis ein Eingangssignal an dem Geräteanschluss dauerhaft auf einen High-Pegel hochzieht, wenn der Knoten, an dem Eingangskreis und Ausgangskreis zusammengeführt sind, zwischen dem Geräteanschluss und dem Testschalter liegt. Die Ausgestaltung ist daher sehr vorteilhaft, um auf einfache Weise eine hohe Fehlersicherheit zu erreichen.

In einer weiteren Ausgestaltung besitzt das Sicherheitsschaltgerät eine Diode oder ein gleichartiges Bauteil, das zwischen dem Signalpfad und dem Geräteanschluss angeordnet ist, um den Signalpfad von der Anschlussklemme zu entkoppeln.

Eine Diode oder ein gleichartiges Bauteil in diesem Sinne ist ein Bauteil, das einen Stromfluss praktisch nur in einer Richtung ermöglicht, nicht jedoch in der Gegenrichtung. Die Ausgestaltung ist eine sehr einfache Möglichkeit, um zu verhindern, dass das Eingangssignal über den Signalpfad zur Auswerte- und Steuereinheit gelangt und somit den Testschalter umgehen kann. In Kombination mit der zuvor genannten Ausgestaltung ermöglicht diese Ausgestaltung eine fehlersichere Detektion von Low-Pegeln an dem konfigurierbaren Geräteanschluss. Daher ist die Kombination dieser beiden Ausgestaltungen besonders vorteilhaft, um auf kostengünstige Weise eine hohe Sicherheitskategorie an dem konfigurierbaren Geräteanschluss zu erreichen.

In einer weiteren Ausgestaltung besitzt das Sicherheitsschaltgerät eine Vielzahl von Eingangskreisen und eine Vielzahl von Ausgangskreisen, die jeweils paarweise an einer Vielzahl von Geräteanschlüssen zusammengeführt sind.

In dieser Ausgestaltung besitzt das Sicherheitsschaltgerät mehrere konfigurierbare Geräteanschlüsse der zuvor beschriebenen Art. Vorteilhafterweise ist jeder dieser konfigurierbaren Geräteanschlüsse mit Hilfe der beiden zuvor genannten Ausgestaltungen fehlersicher realisiert. Die Bereitstellung von mehreren solchen konfigurierbaren Geräteanschlüssen ermöglicht eine besonders flexible Verwendung des neuen Sicherheitsschaltgerätes für Anwendungen bis einschließlich Kategorie 4/SIL3, indem jeweils zwei konfigurierbare Geräteanschlüsse als redundante Eingänge und/oder redundante Ausgänge zur Verfügung gestellt werden.

In einer weiteren Ausgestaltung beinhalt zumindest einer der Ausgangskreise das zumindest eine Schaltelement.

In dieser Ausgestaltung dient zumindest einer der konfigurierbaren Geräteanschlüsse als Ausgangsanschluss, über den das Sicherheitsschaltgerät den elektrischen Verbraucher abschaltet. Alternativ hierzu ist es in anderen Ausgestaltungen denkbar, dass die ausgangsseitigen Schaltelemente zum Abschalten des Verbrauchers an nicht-konfigurierbaren Geräteanschlüssen herausgeführt sind, das heißt dass die konfigurierbaren Geräteanschlüsse im Wesentlichen zur Ansteuerung von Meldegeräten und zum Aufnehmen der Eingangssignale von den Meldegeräten dienen. Die vorliegende Ausgestaltung ermöglicht demgegenüber eine noch höhere Flexibilität. In einigen Ausführungsbeispielen sind sämtliche Geräteanschlüsse, die zum Anschließen von Meldegeräten und/oder Aktoren dienen, als konfigurierbare Geräteanschlüsse mit einem zusammengeführten Eingangskreis und Ausgangskreis der oben beschriebenen Art realisiert.

In einer weiteren Ausgestaltung ist die Auswerte- und Steuereinheit dazu ausgebildet, das Eingangssignal mit Hilfe des Testschalters innerhalb definierter Zeitintervalle wiederholt zu unterdrücken. Vorzugsweise unterdrückt die Auswerte- und Steuereinheit das Eingangssignal mit Hilfe des Testschalters in periodischen Zeitintervallen.

In dieser Ausgestaltung testet die Auswerte- und Steuereinheit die Detektionsfähigkeit des Eingangskreises automatisch innerhalb der definierten Zeitintervalle. In einigen Ausführungsbeispielen ist die Länge der definierten Zeitintervalle in der Auswerte- und Steuereinheit fest vorgegeben. In anderen Ausführungsbeispielen kann die Länge der definierten Zeitintervalle vom Anwender des Sicherheitsschaltgerätes konfiguriert werden. Die Ausgestaltung trägt vorteilhaft dazu bei, eine Zweitfehlereintrittswahrscheinlichkeit nach Auftreten eines ersten Fehlers zu reduzieren. Damit erleichtert diese Ausgestaltung das Erreichen einer höheren Sicherheitskategorie.

In einer weiteren Ausgestaltung ist die Auswerte- und Steuereinheit dazu ausgebildet, mit Hilfe des Ausgangskreises wahlweise ein stationäres Ausgangssignal oder ein getaktetes Ausgangssignal mit einer definierten Taktperiode zu erzeugen.

Diese Ausgestaltung ist vorteilhaft, wenn der Ausgangskreis zum Bereitstellen eines Rücklesesignals verwendet werden soll, mit dessen Hilfe passive Meldegeräte, wie etwa ein Not-Aus-Taster, überwacht werden. Die Ausgestaltung ermöglicht wahlweise stationäre oder getaktete Ausgangssignale zu dem Meldegerät, so dass der Anwender das neue Sicherheitsschaltgerät noch flexibler einsetzen kann.

In einer weiteren Ausgestaltung weist die Auswerte- und Steuereinheit einen ersten und einen zweiten Signalverarbeitungskanal auf, die das Eingangssignal redundant zueinander verarbeiten, um das zumindest Schaltelement anzusteuern. In einigen Ausführungsbeispielen steuern der erste und der zweite Signalverarbeitungskanal den Testschalter wechselweise an. In anderen Ausführungsbeispielen kann das Sicherheitsschaltgerät zwei redundante Testschalter aufweisen, beispielsweise in Serie zueinander, wobei jeweils ein Signalverarbeitungskanal einen der redundanten Testschalter ansteuert. In anderen Ausführungsbeispielen besitzt der Eingangskreis jedoch nur einen Testschalter, der von dem ersten Signalverarbeitungskanal angesteuert wird, wobei die beiden Signalverarbeitungskanäle ihre Testergebnisse ebenso vergleichen wie bei der redundanten Verarbeitung des Eingangssignals.

Die Ausgestaltung ermöglicht auf einfache Weise eine durchgängige Einfehlersicherheit in dem Signalverarbeitungsteil des Sicherheitsschaltgerätes und damit eine hohe Einsatzbandbreite und Flexibilität.

In einer weiteren Ausgestaltung besitzt das Sicherheitsschaltgerät zumindest zwei Schaltelemente, die von der Auswerte- und Steuereinheit redundant angesteuert werden, um den Stromversorgungspfad zu dem Verbraucher zu unterbrechen.

Auch diese Ausgestaltung trägt dazu bei, dem Anwender die Realisierung einer Sicherheitsschaltung zu vereinfachen, die die Anforderungen der Kategorie 4/SIL3 erfüllt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine vereinfachte Darstellung eines bevorzugten Ausführungsbeispiels des neuen Sicherheitsschaltgerätes an einer Maschinenanlage, und
- Figur 2: einen der konfigurierbaren Geräteanschlüsse des Sicherheitsschaltgerätes aus Figur 1.

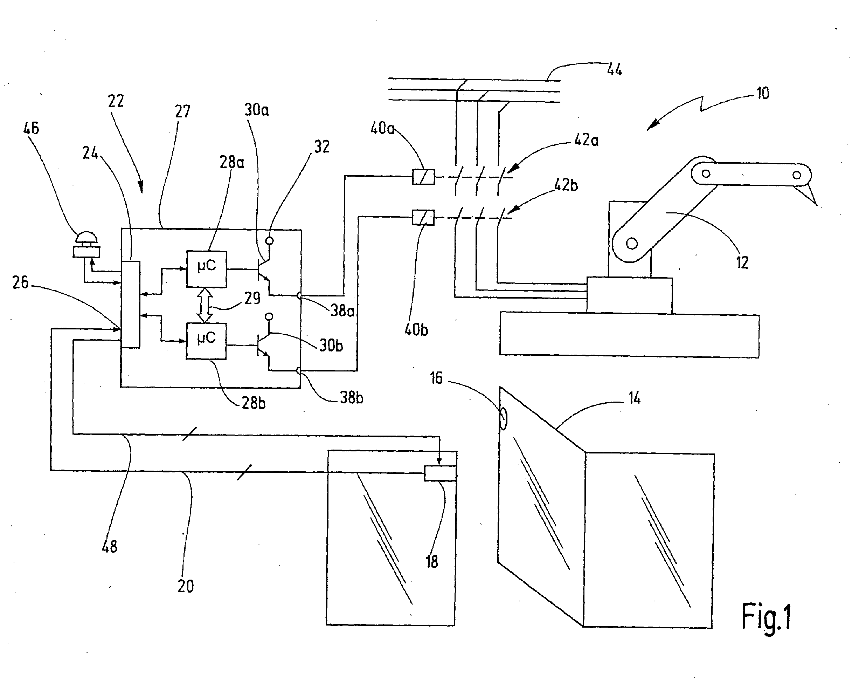

In Fig. 1 ist eine Anlage mit einem Ausführungsbeispiel des neuen Sicherheitsschaltgerätes in der Gesamtheit mit der Bezugsziffer 10 bezeichnet. Die Anlage 10 beinhaltet hier beispielhaft einen Roboter 12, von dessen Bewegungen im Arbeitsbetrieb eine Gefahr für Personen ausgeht, die sich im Arbeitsbereich des Roboters 12 aufhalten. Aus diesem Grund ist der Arbeitsbereich des Roboters 12 mit einem Schutzzaun mit einer Schutztür 14 abgesichert. Die Schutztür 14 ermöglicht den Zugang in den Arbeitsbereich des Roboters 12, beispielsweise für Wartungsarbeiten oder für Einrichtarbeiten. Im normalen Arbeitsbetrieb darf der Roboter 12 jedoch nur arbeiten, wenn die Schutztür 14 geschlossen ist. Sobald die Schutztür 14 geöffnet wird, muss der Roboter 12 abgeschaltet werden oder auf andere Weise in einen sicheren Zustand gebracht werden.

Um den geschlossenen Zustand der Schutztür 14 zu detektieren, ist an der Schutztür 14 ein Schutztürschalter mit einem Türteil 16 und einem Rahmenteil 18 angebracht. Das Rahmenteil 18 erzeugt auf einer Leitung 20 ein Schutztürsignal, das über die Leitung 20 einem Ausführungsbeispiel 22 des neuen Sicherheitsschaltgerätes zugeführt ist.

Das Sicherheitsschaltgerät 22 besitzt in diesem Ausführungsbeispiel einen E/A-Teil 24 mit einer Vielzahl von Geräteanschlüssen 26. In einigen Ausführungsbeispielen sind die Geräteanschlüsse 26 Anschlussklemmen, die an einer Gehäuseseite des Gehäuses 27 des Sicherheitsschaltgerätes 22 angeordnet sind. Beispielsweise kann es sich um Federzugklemmen oder um Schraubklemmen handeln. In anderen Ausführungsbeispielen können die Geräteanschlüsse Stecker oder Buchsen sein, die mehrere Kontaktelemente (Pins) beinhalten, wobei jeweils ein Pin einen Geräteanschluss bildet. Häufig werden M8-Buchsen mit fünf Kontaktpins für den Anschluss von Meldegeräten oder anderen Sensoren auf Feldebene verwendet. Dementsprechend können Ausführungsbeispiele des neuen Sicherheitsschaltgerätes Feldgeräte sein, die außerhalb eines Schaltschranks in räumlicher Nähe zu dem Roboter 12 angeordnet sind.

Das Sicherheitsschaltgerät 22 besitzt in diesem Ausführungsbeispiel zwei redundante Signalverarbeitungskanäle. Beispielhaft sind hier zwei Mikrokontroller 28a, 28b dargestellt, die jeweils mit dem E/A-Teil 24 verbunden sind. Die Mikrokontroller 28a, 28b verarbeiten hier redundant zueinander die Eingangssignale, die das Sicherheitsschaltgerät 22 an den Geräteanschlüssen 26 des E/A-Teils aufnimmt, und sie vergleichen ihre Ergebnisse, was mit einem Pfeil 29 dargestellt ist. Anstelle von zwei Mikrokontrollern 28a, 28b können Mikroprozessoren, ASICs, FPGAs und/oder andere Signalverarbeitungsschaltkreise verwendet sein. Bevorzugt besitzen Ausführungsbeispiele des Sicherheitsschaltgerätes 22 zumindest zwei zueinander redundante Signalverarbeitungskanäle, die jeweils in der Lage sind, logische Signalverknüpfungen vorzunehmen, um in Abhängigkeit davon Schaltelemente zum Abschalten des Roboters 12 anzusteuern.

In dem hier dargestellten Fall besitzt das Sicherheitsschaltgerät 22 zwei redundante Schaltelemente 30a, 30b. Jedes dieser beiden Schaltelemente ist in der Lage, ein hohes Spannungspotential 32 zu einem Geräteanschluss 38a, 38b des Sicherheitsschaltgerätes 22 durchzuschalten, um einen Stromfluss zu einem Schütz 40a, 40b zu ermöglichen, oder diesen Stromfluss zu unterbrechen. Damit kann jedes der Schaltelemente 30 einen Aktor, wie einen Schütz oder ein Magnetventil, abschalten.

Die Schütze 40a, 40b besitzen jeweils Arbeitskontakte 42a, 42b. Die Arbeitskontakte 42a, 42b sind hier in Reihe zueinander in einen Stromversorgungspfad von einer Stromversorgung 44 zu dem Roboter 12 angeordnet. Sobald das Sicherheitsschaltgerät 22 die Schütze 40a, 40b abschaltet, fallen die Kontakte 42 ab und die Stromversorgung für den Roboter 12 wird abgeschaltet. Den einschlägigen Fachleuten ist klar, dass eine solche "radikale" Abschaltung hier beispielhaft beschrieben ist. Abweichend hiervon können bei einer Sicherheitsanforderung lediglich Teile des Roboters 12 abgeschaltet werden, wie etwa die gefährlichen Antriebe, während andere Teile des Roboters 12 funktionsbereit bleiben. Auch ein verzögertes Abschalten ist denkbar, damit der Roboter 12 ggf. vor dem Abschalten der Antriebe kontrolliert abgebremst werden kann.

Das Sicherheitsschaltgerät 12 steuert die Schaltelemente 30a, 30b hier in Abhängigkeit von dem Signal des Schutztürschalters auf der Leitung 20 und in Abhängigkeit von einem weiteren Eingangssignal von einem Not-Aus-Taster 46 an. Auch der Not-Aus-Taster 46 ist über Leitungen mit Geräteanschlüssen 26 des Sicherheitsschaltgerätes 22 verbunden.

In einigen Ausführungsbeispielen erzeugt das Sicherheitsschaltgerät 22 Ausgangssignale, die den einzelnen Meldegeräten zugeführt sind. Beispielhaft ist ein solches Ausgangssignal über eine Leitung 48 zu dem Rahmenteil 18 des Schutztürschalters geführt. Das Rahmenteil 18 schleift das Ausgangssignal des Sicherheitsschaltgerätes 22 von der Leitung 48 auf die Leitung 22, wenn sich das Türteil 16 in der Nähe des Rahmenteils 18 befindet, das heißt wenn die Schutztür 14 geschlossen ist. Daher kann das Sicherheitsschaltgerät 22 den Schutztürschalter mit Hilfe des Ausgangssignals auf der Leitung 48 und mit Hilfe des Eingangssignals auf der Leitung 20 überwachen. In vergleichbarer Weise überwacht das Sicherheitsschaltgerät 22 hier den Not-Aus-Taster 46.

Abweichend von der Darstellung in Fig. 1 werden in der Praxis häufig zwei redundante Ausgangssignale des Sicherheitsschaltgerätes 22 verwendet, die jeweils über eine separate Signalleitung zu einem Meldegerät geführt sind und über dieses Meldegerät zurück zum Sicherheitsschaltgerät 22 geschleift sind. Beispielhaft für eine solche Realisierung sei auf DE 10 2004 020 995 A1 verwiesen, die hinsichtlich der Details einer solchen redundanten Überwachung eines Meldegerätes durch Bezugnahme aufgenommen ist. Auch der Not-Aus-Taster 46 wird in der Praxis häufig mit redundanten Eingangs- und Ausgangsleitungen überwacht.

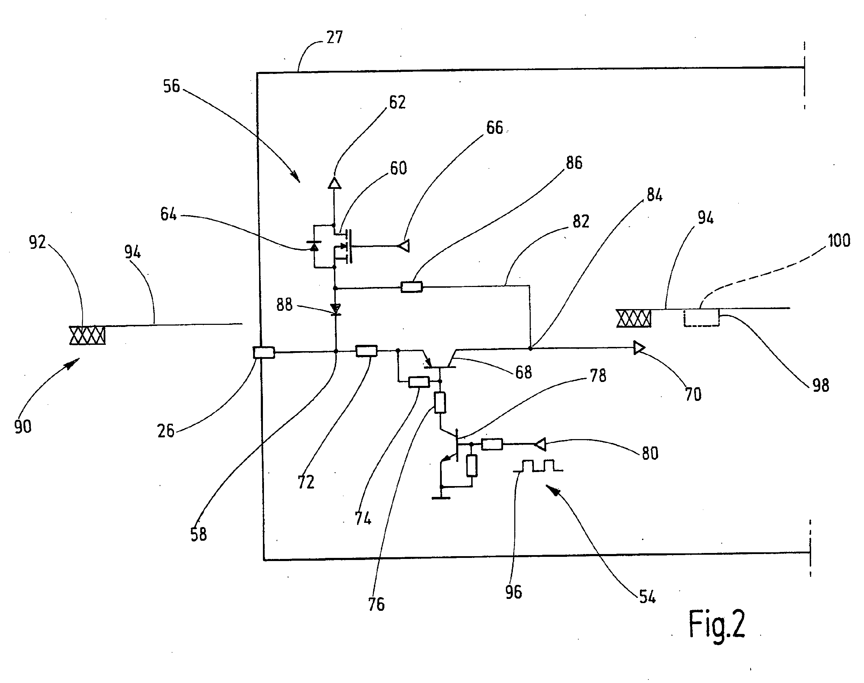

Fig. 2 zeigt ein bevorzugtes Ausführungsbeispiel zur Realisierung eines konfigurierbaren Geräteanschlusses des Sicherheitsschaltgerätes 22. In den bevorzugten Ausführungsbeispielen sind sämtliche Signaleingänge zum Anschluss von Meldegeräten in Form eines solchen oder in Form eines ähnlichen konfigurierbaren Geräteanschlusses realisiert. Des Weiteren sind in den bevorzugten Ausführungsbeispielen auch die Ausgänge des E/A-Teils 24 in Form eines solchen oder ähnlichen Geräteanschlusses realisiert, so dass das Sicherheitsschaltgerät 22 in den bevorzugten Ausführungsbeispielen ausschließlich konfigurierbare Geräteanschlüsse 26 aufweist, die wahlweise als Eingang oder Ausgang verwendet werden können.

Des Weiteren können auch die Geräteanschlüsse 38a, 38b des Sicherheitsschaltgerätes 22 als konfigurierbare Geräteanschlüsse der in Fig. 2 dargestellten Art realisiert sein. In diesen Fällen kann das Sicherheitsschaltgerät 22 zum Anschluss von Meldegeräten und/oder Aktoren ausschließlich konfigurierbare Geräteanschlüsse aufweisen. In solchen Ausführungsbeispielen benötigt das Sicherheitsschaltgerät 22 dann nur noch zusätzliche Anschlüsse zum Zuführen einer Betriebsspannung (U_{B} und Masse) sowie eventuell Geräteanschlüsse für eine Datenkommunikation, wie beispielsweise einen Anschluss für Feldbussysteme wie SafetyNET p®.

In den bevorzugten Ausführungsbeispielen besitzt das Sicherheitsschaltgerät 22 für jeden Geräteanschluss 26 einen Eingangskreis 54 und einen Ausgangskreis 56. Der Eingangskreis 54 dient zum Aufnehmen eines Eingangssignals, das an dem Geräteanschluss 26 zugeführt ist, beispielsweise zum Aufnehmen des Signals 20 von dem Schutztürschalter 18. Der Ausgangskreis 56 dient zum Erzeugen eines Ausgangssignals, wie etwa des Ausgangssignals, das über die Leitung 48 zu dem Schutztürschalter 18 geführt ist. Es versteht sich, dass der konfigurierbare Geräteanschluss 26 in diesen Fällen entweder als Eingang oder als Ausgang konfiguriert ist, d.h. er erfüllt nicht beide Funktionen gleichzeitig.

Der Eingangskreis 54 und der Ausgangskreis 56 sind an einem Knoten 58 zusammengeführt. In diesem Ausführungsbeispiel ist der Knoten 58 direkt mit dem Anschluss 26 elektrisch verbunden. In anderen Ausführungsbeispielen können zwischen der Klemme oder dem Kontaktelement am Geräteanschluss 26 und dem Knoten 58 jedoch noch einzelne Bauteile angeordnet sein, etwa eine Filterschaltung oder dergleichen.

Der Ausgangskreis besitzt in diesem Ausführungsbeispiel einen MOS-Transistor 60, dessen Source-Anschluss mit einem definierten Spannungspotential 62 verbunden ist. Das Spannungspotential 62 kann beispielsweise ein 24 Volt-Potential sein, das aus der Betriebsspannung abgeleitet ist, die dem Sicherheitsschaltgerät 22 zur Versorgung zugeführt ist (hier nicht dargestellt). Parallel zu der Source-Drain-Strecke des MOS-Transistors 60 ist hier eine Löschdiode 64 angeordnet, um Spannungsspitzen beim Abschalten induktiver Lasten zu begrenzen. Der Gate-Anschluss des MOS-Transistors 60 ist mit einem Anschlusspunkt 66 verbunden, der in den bevorzugten Ausführungsbeispielen zu der Auswerte- und Steuereinheit 28 des Sicherheitsschaltgerätes 22 geführt ist, so dass die Auswerte- und Steuereinheit 28 den MOS-Transistor 60 wahlweise leitend oder sperrend schalten kann. In einigen Ausführungsbeispielen kann der E/A-Teil 24 ein UND-Logikgatter (hier nicht dargestellt) beinhalten, wobei der Ausgang dieses UND-Gatters mit dem Anschlusspunkt 66 verbunden ist und wobei die zumindest zwei Eingänge des UND-Gatters von jeweils einem der Signalverarbeitungskanäle 28a, 28b der Auswerte- und Steuereinheit angesteuert werden.

Der Eingangskreis 54 besitzt einen Testschalter, der hier als Längstransistor 68 zwischen dem Knoten 58 und einem weiteren Anschlusspunkt 70 angeordnet ist. In dem dargestellten Ausführungsbeispiel ist der Transistor 68 ein PNP-Transistor. Der Kollektor des PNP-Transistors 68 ist mit dem Anschlusspunkt 66 verbunden, während der Emitter des PNP-Transistors 68 über einen Widerstand 72 mit dem Knoten 58 verbunden ist. Die Basis des PNP-Transistors 68 ist mit einem Abgriff eines Spannungsteilers verbunden, wobei ein erster Widerstand 74 des Spannungsteilers parallel zu der Bäsis-Emitterstrecke geschaltet ist, während ein zweiter Widerstand 76 des Spannungsteilers zum Emitter eines weiteren Transistors 78 führt. Der Emitter des weiteren Transistors 78 ist mit einem Masse-Potential verbunden. Der Basisanschluss des weiteren Transistors 78 ist mit einem weiteren Anschlusspunkt 80 verbunden. Der weitere Anschlusspunkt 80 ist ebenfalls mit der Auswerte- und Steuereinheit gekoppelt (hier nicht dargestellt). In einigen Ausführungsbeispielen ist der Anschlusspunkt 80 lediglich mit einem der Signalverarbeitungskanäle 28a, 28b verbunden. In jedem Fall kann die Auswerte- und Steuereinheit über ein Steuersignal am Anschlusspunkt 80 den Längstransistor 68 leitend oder sperrend schalten, um so ein Eingangssignal am Geräteanschluss 26 wahlweise zum Anschlusspunkt 70 durchzuschalten oder vom Anschlusspunkt 70 abzutrennen. Im letztgenannten Fall unterdrückt die Auswerte- und Steuereinheit mit Hilfe des Längstransistors 68 das Eingangssignal am Geräteanschluss 26, da dieses die Auswerte- und Steuereinheit nicht mehr über den Anschlusspunkt 70 erreichen kann.

Mit der Bezugsziffer 82 ist ein Signalpfad bezeichnet, der vom Drain-Anschluss des MOS-Transistors 60 zu einem Knoten 84 führt. Der Knoten 84 ist mit dem Kollektor des Längstransistors 68 verbunden. Somit bildet der Signalpfad 82 einen Überbrückungspfad, der über den Knoten 58 und den Knoten 84 führt. In dem Signalpfad 82 ist hier noch ein Widerstand 86 angeordnet. Des Weiteren ist zwischen dem Knoten 58 und dem Drain-Anschluss des MOS-Transistors 60 eine Diode 88 in Sperrrichtung geschaltet, so dass ein Eingangssignal vom Geräteanschluss 26 nicht über den Signalpfad 82 zum Knoten 84 gelangen kann. Ein Ausgangssignal am Drain-Anschluss des MOS-Transistors 60 wird jedoch über den Widerstand 86 und den Knoten 84 zu dem Anschlusspunkt 70 geführt.

Die Funktionsweise des konfigurierbaren Geräteanschlusses 26 ist nun wie folgt:

Wenn der Geräteanschluss 26 als Ausgang zum Ausgeben eines Ausgangssignals verwendet werden soll, steuern die Signalverarbeitungskanäle 28a, 28b der Auswerte- und Steuereinheit den MOS-Transistor 60 über den Anschlusspunkt 66 wahlweise leitend oder sperrend. Auf diese Weise kann die Auswerte- und Steuereinheit am Geräteanschluss 26 ein Ausgangssignal erzeugen, das zwischen einem High-Pegel (Spannungspotential 62) und einem Low-Pegel (0 Volt, hochohmig) wechselt. Über den Signalpfad 82 und den Anschlusspunkt 70 können die Signalverarbeitungskanäle 28a, 28b das erzeugte Ausgangssignal am Geräteanschluss 26 zurücklesen. Dies ist insbesondere vorteilhaft, wenn der MOS-Transistor 60 als eines der Schaltelemente 30a, 30b verwendet wird, um einen der Schütze 40a, 40b leitend oder sperrend zu schalten. In einigen Fällen steuert die Auswerte- und Steuereinheit den Transistor 78 über den Anschlusspunkt 80 so an, dass der Längstransistor 68 geöffnet ist, während der MOS-Transistor 60 das Ausgangssignal am Geräteanschluss 26 erzeugt, um den Eingangskreis vom Ausgangskreis zu entkoppeln.

Wenn der Geräteanschluss 26 hingegen als Eingang dienen soll, öffnet die Auswerte- und Steuereinheit den MOS-Transistor 60 über den Anschlusspunkt 66. Wenn der MOS-Transistor 60 fehlerfrei funktioniert, wird der Signalpfad 82 hochohmig. Nun kann ein Eingangssignal über den Geräteanschluss 26 und den Längstransistor 68 zum Anschlusspunkt 70 und von dort zu den beiden Signalverarbeitungskanälen 28a, 28b der Steuereinheit gelangen. Beispielhaft ist ein Eingangssignal in Fig. 2 bei der Bezugsziffer 90 dargestellt. Das Eingangssignal 90 kann hier in einem ersten Zeitraum 92 einen beliebigen Signalzustand haben, der über den leitend geschalteten Längstransistor 68 zum Anschlusspunkt 79 gelangt. Wenn das Signal im Zeitraum 94 einen hohen Signalpegel besitzt, gelangt dieser über den leitend geschalteten Längstransistor 68 zum Anschlusspunkt 70. In den bevorzugten Ausführungsbeispielen unterdrückt die Auswerte- und Steuereinheit das Eingangssignal 90 jedoch mit Hilfe des Längstransistors 68 in periodischen Zeitintervallen, indem sie ein periodisches Steuersignal 96 (beispielsweise ein Rechtecksignal) am Anschlusspunkt 80 erzeugt. Mit jedem positiven Signalpuls des Steuersignals 96 öffnet der Steuertransistor 78 den Längstransistor 68. Dementsprechend gelangt der High-Pegel 94 des Signals 90 während eines definierten Zeitintervalls 98 nicht zum Anschlusspunkt 70. Da die Auswerte- und Steuereinheit diesen Test selbst initiiert hat, kann sie anhand des unterdrückten Eingangssignals 98 die Funktionsfähigkeit des Eingangs am Geräteanschluss 26 und insbesondere die Fähigkeit zur Detektion von Low-Pegeln überprüfen.

Sollte der MOS-Transistor 60 aufgrund eines Bauteilversagens durchlegieren, würde über den Signalpfad 82 das Spannungspotential 62 zum Knoten 64 gelangen, und die Auswerte- und Steuereinheit würde folglich auch dann ein High-Potential "sehen", wenn der Längstransistor 68 gesperrt ist. Dies ist bei Bezugsziffer 100 symbolisch dargestellt. In einem solchen Fall könnte die Auswerte- und Steuereinheit einen am Geräteanschluss 26 anliegenden Low-Pegel nicht mehr erkennen. Daher erzeugt die Auswerte- und Steuereinheit in einem solchen Fall ein Abschaltsignal an den Geräteanschlüssen 38, um die Anlage in einen sicheren Ruhezustand zu bringen.

Das neue Sicherheitsschaltgerät 22 verfügt somit über konfigurierbare Geräteanschlüsse 26, die wahlweise als Eingang oder Ausgang eines Sicherheitsschaltgerätes verändert werden können. Sowohl die Eingangsfunktion als auch die Ausgangsfunktion kann zur Realisierung von Sicherheitsfunktionen verwendet werden, da das Sicherheitsschaltgerät 22 mit Hilfe des Testschalters 68 und mit Hilfe des Überbrückungs-Signalpfades 82 gewährleistet, dass sicherheitsrelevante Low-Pegel am Eingang erkannt werden. Zur Realisierung eines sicheren Ausgangs stellt das Sicherheitsschaltgerät 22 in bevorzugten Ausführungsbeispielen mehrere konfigurierbare Geräteanschlüsse zur Verfügung, so dass jeweils zwei Ausgangskreise 56 als redundante Schaltelemente zum redundanten Abschalten eines elektrischen Verbrauchers verwendet werden können.

## Patentansprüche

1. Sicherheitsschaltgerät zum fehlersicheren Abschalten eines elektrischen Verbrauchers (12), mit einer Anzahl von Geräteanschlüssen (26, 38), mit zumindest einem Eingangskreis (54) zum Aufnehmen eines Eingangssignals (20, 90) von einem Meldegerät (18, 46), das einen sicherheitsrelevanten Zustand signalisiert, mit zumindest einem Ausgangskreis (56) zum Ausgeben eines Ausgangssignals (48), mit zumindest einem Schaltelement (30), das dazu ausgebildet ist, einen Stromversorgungspfad (44) zu dem Verbraucher (12) zu unterbrechen, und mit einer Auswerte- und Steuereinheit (28), die dazu ausgebildet ist, das zumindest eine Schaltelement (30) in Abhängigkeit von dem Eingangssignal (20, 90) anzusteuern, **dadurch gekennzeichnet daß** der zumindest eine Eingangskreis (54) und der zumindest eine Ausgangskreis (56) an einem Geräteanschluss (26) zusammengeführt sind, so dass dieser Geräteanschluss (26) wahlweise als Eingang zum Aufnehmen des Eingangssignals (90) oder als Ausgang zum Ausgeben des Ausgangssignals (48) verwendbar ist, wobei der Eingangskreis einen Testschalter (68) aufweist, der mit der Auswerte- und Steuereinheit (28) gekoppelt ist, und wobei die Auswerte- und Steuereinheit (28) dazu ausgebildet ist, das Eingangssignal (90) mit Hilfe des Testschalters (68) gezielt zu unterdrücken.

2. Sicherheitsschaltgerät nach Anspruch 1, wobei der zumindest eine Eingangskreis (54) und der zumindest eine Ausgangskreis (56) an einem Knoten (58) zusammengeführt sind, der zwischen dem Geräteanschluss (26) und dem Testschalter (68) liegt.

3. Sicherheitsschaltgerät nach Anspruch 1 oder 2, ferner mit einem Signalpfad (82), der mit dem Ausgangskreis (56) verbunden ist und der den Testschalter (68) überbrückt.

4. Sicherheitsschaltgerät nach Anspruch 3, ferner mit einer Diode (88) oder einem gleichartigen Bauteil, das zwischen dem Signalpfad (82) und dem Geräteanschluss (26) angeordnet ist, um den Signalpfad (82) von dem Geräteanschluss (26) zu entkoppeln.

5. Sicherheitsschaltgerät nach einem der Ansprüche 1 bis 4, mit einer Vielzahl von Eingangskreisen (54) und einer Vielzahl von Ausgangskreisen (56), die jeweils paarweise an einer Vielzahl von Anschlussklemmen (26) zusammengeführt sind.

6. Sicherheitsschaltgerät nach einem der Ansprüche 1 bis 5, wobei zumindest einer der Ausgangskreise (56) das zumindest eine Schaltelement (30) beinhaltet.

7. Sicherheitsschaltgerät nach einem der Ansprüche 1 bis 6, wobei die Auswerte- und Steuereinheit (28) dazu ausgebildet ist, das Eingangssignal (90) mit Hilfe des Testschalters (68) innerhalb definierter Zeitintervalle wiederholt zu unterdrücken.

8. Sicherheitsschaltgerät nach einem der Ansprüche 1 bis 7, wobei die Auswerte- und Steuereinheit (28) dazu ausgebildet ist, mit Hilfe des Ausgangskreises (56) wahlweise ein stationäres Ausgangssignal oder ein getaktetes Ausgangssignal mit einer definierten Taktperiode zu erzeugen.

9. Sicherheitsschaltgerät nach einem der Ansprüche 1 bis 8, wobei die Auswerte- und Steuereinheit (28) einen ersten und einen zweiten Signalverarbeitungskanal (28a, 28b) aufweist, die das Eingangssignal (90) redundant zueinander verarbeiten, um das zumindest eine Schaltelement (30) anzusteuern.

10. Sicherheitsschaltgerät nach einem der Ansprüche 1 bis 9, mit zumindest zwei Schaltelementen (30a, 30b), die von der Auswerte- und Steuereinheit (28) redundant angesteuert werden, um den Stromversorgungspfad (44) zu dem Verbraucher (12) zu unterbrechen.

## Claims

1. A safety switching device for the failsafe shutdown of an electrical load (12), comprising a number of device connectors (26, 38), comprising at least one input circuit (54) for receiving an input signal (20, 90) from a signaling device (18, 46) which signals a safety-related state, comprising at least one output circuit (56) for outputting an output signal (48), comprising at least one switching element (30) designed for interrupting a current supply path (44) to the load (12), and comprising an evaluation and control unit (28) designed for actuating the at least one switching element (30) in dependence on the input signal (20, 90), **characterized in that** the at least one input circuit (54) and the at least one output circuit (56) are joined at one from the device connectors (26) so that said one device connector (26) can selectively be used as input for receiving the input signal (90) or as output for outputting the output signal (48), with the input circuit having a test switch (68) which is coupled to the evaluation and control unit (28), and with the evaluation and control unit (28) being designed for selectively suppressing the input signal (90) using the test switch (68).

2. The safety switching device of claim 1, wherein the at least one input circuit (54) and the at least one output circuit (56) are joined at a node (58) which is located between said one device connector (26) and the test switch (68).

3. The safety switching device of claim 1 or 2, further comprising a signal path (82) which is connected to the output circuit (56) and which by-passes the test switch (68).

4. The safety switching device of claim 3, further comprising a diode (88) or a similar component which is arranged between the signal path (82) and the device connector (26) in order to decouple the signal path (82) from the device connector (26).

5. The safety switching device of one of claims 1 to 4, comprising a plurality of input circuits (54) and a plurality of output circuits (56) which are respectively joined in pairs at a plurality of connecting terminals (26).

6. The safety switching device of one of claims 1 to 5, wherein at least one of the output circuits (56) comprises the at least one switching element (30).

7. The safety switching device of one of claims 1 to 6, wherein the evaluation and control unit (28) is designed for suppressing the input signal (90) using the test switch (68) repeatedly within defined time intervals.

8. The safety switching device of one of claims 1 to 7, wherein the evaluation and control unit (28) is designed for selectively generating, by means of the output circuit (56), a steady-state output signal or a clocked output signal having a defined clock period.

9. The safety switching device of one of claims 1 to 8, wherein the evaluation and control unit (28) has a first and a second signal processing channel (28a, 28b) which process the input signal (90) redundantly with respect to one another in order to actuate the at least one switching element (30).

10. The safety switching device of one of claims 1 to 9, comprising at least two switching elements (30a, 30b) which are actuated redundantly by the evaluation and control unit (28) in order to interrupt the current supply path (44) to the load (12).

## Revendications

1. Commutateur de sécurité destiné à débrancher de manière sécurisée un consommateur électrique (12) et présentant
plusieurs bornes d'appareil (26, 38),
au moins un circuit d'entrée (54) qui reçoit un signal d'entrée (20, 90) d'un appareil de transmission (18, 46) qui signale une situation concernant la sécurité,
au moins un circuit de sortie (56) qui délivre un signal de sortie (48),
au moins un élément de commutation (30) configuré pour interrompre un parcours (44) d'alimentation en courant du consommateur (12) et une unité (28) d'évaluation et de commande configurée pour commander le ou les éléments de commutation (30) en fonction du signal d'entrée (20, 90),
**caractérisé en ce que**
le ou les circuits d'entrée (54) et le ou les circuits de sortie (56) sont rassemblés sur une borne d'appareil (26) de telle sorte que cette borne d'appareil (26) puisse être utilisée sélectivement comme entrée de réception du signal d'entrée (90) ou comme sortie de fourniture du signal de sortie (48),
**en ce que** le circuit d'entrée présente un commutateur de test (68) couplé à l'unité d'évaluation et de commande (28) et
**en ce que** l'unité d'évaluation et de commande (28) est configurée pour supprimer de manière contrôlée le signal d'entrée (90) à l'aide du commutateur de test (68).

2. Commutateur de sécurité selon la revendication 1, dans lequel le ou les circuits d'entrée (54) et le ou les circuits de sortie (56) sont rassemblés en un noeud (58) situé entre la borne d'appareil (26) et le commutateur de test (68).

3. Commutateur de sécurité selon les revendications 1 ou 2, présentant en outre un parcours (82) de signaux qui est raccordé au circuit de sortie (56) et qui ponte le commutateur de test (68).

4. Commutateur de sécurité selon la revendication 3, présentant en outre une diode (88) ou un composant similaire disposé entre le parcours (82) de signaux et la borne d'appareil (26) pour découpler le parcours (82) de signaux de la borne d'appareil (26).

5. Commutateur de sécurité selon l'une des revendications 1 à 4, présentant plusieurs circuits d'entrée (54) et plusieurs circuits de sortie (56), chacun rassemblé par paire à plusieurs bornes de raccordement (26).

6. Commutateur de sécurité selon l'une des revendications 1 à 5, dans lequel au moins l'un des circuits de sortie (56) contient le ou les éléments de commutation (30).

7. Commutateur de sécurité selon l'une des revendications 1 à 6, dans lequel l'unité d'évaluation et de commande (28) est configurée pour supprimer de manière répétée le signal d'entrée (90) à l'aide du commutateur de test (68) au cours d'intervalles de temps définis.

8. Commutateur de sécurité selon l'une des revendications 1 à 7, dans lequel l'unité d'évaluation et de commande (28) est configurée pour former à l'aide du circuit de sortie (56) sélectivement un signal de sortie stationnaire ou un signal de sortie cadencée à une période de cadençage définie.

9. Commutateur de sécurité selon l'une des revendications 1 à 8, dans lequel l'unité d'évaluation et de commande (28) présente un premier et un deuxième canal (28a, 28b) de traitement de signaux qui traite le signal d'entrée (90) de manière redondante pour commander le ou les éléments de commutation (30).

10. Commutateur de sécurité selon l'une des revendications 1 à 9, présentant au moins deux éléments de commutation (30a, 30b) qui sont commandés de manière redondante par l'unité d'évaluation et de commande (28) pour interrompre le parcours (44) d'alimentation en courant du consommateur (12).
